Europäisches Patentamt

European Patent Office

Office européen des brevets

(11) Veröffentlichungsnummer: **0 145 897**
**B1**

(12) **EUROPÄISCHE PATENTSCHRIFT**

(45) Veröffentlichungstag der Patentschrift:
07.01.88

(51) Int. Cl.⁴: **B 23 K 20/00**

(21) Anmeldenummer: **84112757.4**

(22) Anmeldetag: **23.10.84**

(54) **Fügeverfahren.**

(30) Priorität: **03.11.83 DE 3339751**

(43) Veröffentlichungstag der Anmeldung:
**26.06.85 Patentblatt 85/26**

(45) Bekanntmachung des Hinweises auf die Patenterteilung:
**07.01.88 Patentblatt 88/1**

(84) Benannte Vertragsstaaten:
**DE FR GB NL**

(56) Entgegenhaltungen:
**EP - A - 0 090 887**
**DE - A - 2 215 353**
**US - A - 4 089 456**

(73) Patentinhaber: **BBC Aktiengesellschaft Brown, Boveri & Cie., Haselstrasse, CH-5401 Baden (CH)**

(72) Erfinder: **Jahnke, Bernd, Dr. Dipl.-Phys., Adalbert-Seifrizstrasse 10, D-6903 Neckargemünd (DE)**

(74) Vertreter: **Kempe, Wolfgang, Dr. et al, c/o BROWN, BOVERI & CIE AG ZPT Postfach 351, D-6800 Mannheim 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Fügeverfahren gemäss dem Oberbegriff des Patentanspruches 1.

Ein solches Verfahren findet insbesondere bei der Fertigung von Bauteilen eine Anwendung, die aus oxiddispersionsgehärteten Legierungen hergestellt werden. Lauf- und Leitschaufeln sowie Wärmestausegmente von Gasturbinen können aus diesen Legierungen gefertigt werden.

Die Bildung von Bauteilen aus einer oxiddispersionsgehärteten Legierung beginnt mit der Herstellung des die Legierung bildenden Pulvers. Die Metalle bzw. Metallverbindungen, welche bei der Pulverherstellung zum Einsatz kommen, werden in einer Hochenergiemühle mechanisch legiert. Aus dem so gewonnenen Pulver werden zunächst Grundkörper durch Extrudieren hergestellt. Diese Grundkörper werden durch Schmieden, Walzen und/oder mechanische Bearbeitung zu den endgültigen Bauelementen weiterverarbeitet.

Das Besondere an diesen oxiddispersionsgehärteten Legierungen ist, dass sie neben der Oxiddispersion und einer möglichen γ-Ausscheidung eine gerichtete Kornstruktur aufweisen, die durch Rekristallisation entsteht. Von Nachteil ist jedoch hierbei, dass aus der Legierung keine Bauteile gegossen und mit den bekannten Schmelzschweissverfahren zusammengefügt werden können. Bauteile, die beispielsweise in ihrem Zentrum Durchflusskanäle aufweisen sollen, müssen bei der Herstellung aus mindestens 2 Bauelementen gefertigt werden. In diese Bauelemente werden vor dem Zusammenfügen Vertiefungen eingearbeitet, insbesondere eingeschmiedet, die nach dem Zusammenfügen der beiden Hälften die gewünschten Kanäle bilden, welche für die Durchleitung von Kühlflüssigkeiten erforderlich sind. Die feste Verbindung der Bauelemente zu einem solchen Bauteil ist nicht ganz problemlos.

In der EP-OS 0090887 ist das Verbinden von Bauelementen aus dispersiongehärteten Werkstoffen noch in ihrem feinkörnigen Zustand durch Diffusionsschweissen beschrieben. Das Diffusionsschweissen erfolgt mit Parametern, bei denen eine Grobkornbildung ausbleibt und die Energie für eine anschliessende Rekristallisation erhalten bleibt. Eine eventuelle im Temperaturgradienten erfolgende gerichtete Rekristallisation über die Fügefläche hinweg erfolgt nach der Schweissung. Der Nachteil dieses Verfahrens liegt in der hohen Verformbarkeit der Bauteile, da diese bei der Durchführung des Diffusionsschweissens noch nicht rekristallisiert sind. Durch den zum Diffusionsschweissen notwendigen Druck ist es sehr schwierig, die Kühlkanäle im Zentrum des zu bildenden Bauteils unverformt zu lassen. Zusätzliche Massnahmen müssen ergriffen werden, um die Form dieser Kühlkanäle während des Diffusionsschweissens zu erhalten. Eine kostengünstige und definierte Fügung ohne unerwünschte Verformung dieser Kanäle ist bis jetzt nicht möglich. In die Vertiefungen können andererseits auch keine Einsätze eingelötet werden, die geeignet wären, während des Diffusionsschweissens eine Verformung der Vertiefungen zu vermeiden, da alle Lötverfahren, die unter 1000 °C durchgeführt werden, beim Rekristallisationsglühen wieder aufschmelzen.

Ferner ist bekannt, Bauteile aus oxiddispersionsgehärteten Legierungen nach der Rekristallisierung mit einem Hochtemperaturlot zu verbinden. Hierbei kommt es jedoch zu keiner vollständigen Integration der Schweissnaht, so dass der Lötbereich eine Schwachstelle mit verminderten mechanisch-technologischen Eigenschaften darstellt.

Der Erfindung liegt deshalb die Aufgabe zugrunde, ein Fügeverfahren anzugeben, mit dem die Bauelemente aus oxiddispersionsgehärtenden Legierungen so zu eienm Bauteil verbindbar sind, dass eine Verformung der durch das Zusammensetzen gebildeten Kühlkanäle beim Fügen vermieden wird.

Diese Aufgabe wird erfindungsgemäss durch die Merkmale des Patentanspruches 1 gelöst.

Erfindungsgemäss sind die für die Herstellung des gewünschten Bauteils zu verbindenden Bauelemente vollständig fertiggestellt. Sie sind so weit bearbeitet, dass sie ihre endgültige Form aufweisen. Falls das zu fertigende Bauteil Kühlkanäle in seinem Zentrum aufweisen soll, sind entsprechende Vertiefungen in die zu verbindenden Bauelemente einzuarbeiten, so dass durch die Verbindung der Bauelemente die gewünschten Kühlkanäle gebildet werden. Die das Bauteil bildenden Bauelemente sind auch bereits wärmebehandelt, insbesondere sind sie dem zur Erzielung der Oxiddispersionshärtung erforderlichen Rekristallisationsprozess unterworfen worden, so dass ihr Werkstoff eine grobkörnig gerichtete Struktur aufweist. Falls es erforderlich sein sollte, können in die Vertiefungen dieser Bauelemente jetzt Bleche eingelötet werden. Die bei der Verbindung zusammenzufügenden Flächen der Bauelemente können vor dem Verbinden poliert oder mit einer rauhen Struktur versehen werden.

Die Flächen der Bauelemente werden nicht direkt zusammengefügt, vielmehr wird erfindungsgemäss zwischen die zu verbindenden Flächen eine Zwischenschicht angeordnet. Die Zwischenschicht ist aus dem gleichen Material gefertigt wie die miteinander zu verbindenden Bauelemente. Diese Zwischenschicht ist jedoch im Gegensatz zu den Bauelementen noch nicht wärmebehandelt, d. h. ihr Werkstoff ist noch feinkörnig, unrekristallisiert und deshalb verformbar. Die Dicke der Zwischenschicht ist so gewählt, dass sie nach dem Zusammenfügen der beiden Bauelemente mindestens 1 bis 2 Korndurchmesser des rekristallisierten Werkstoffes in transversaler Richtung aufweist. Bei der Herstellung der Zwischenschicht, insbesondere beim Extrudieren des die Zwischenschicht bildenden Grundkörpers wird darauf geachtet, dass die Zwischenschicht die gleiche Extrudierrichtung wie die zu verbindenden Bauteile aufweist. Erfindungsgemäss besteht auch die Möglichkeit, die über die Zwischenschicht miteinander zu verbindenden Oberflächen der Bauelemente so auszubilden, dass sie nach dem Fügen bei der Rekristallisation der Zwischenschicht als Keimbildner für die in der Zwischenschicht entstehenden Körner wirken. Oberflächen mit sägezahnartigen Strukturen, die sich in die verformbare Zwischenschicht einpressen, sind hierfür besonders geeignet. Hierdurch wird ein rekristallisiertes Gefüge ohne unterscheidbare Fügezone gebildet.

Das Verschweissen, insbesondere das Zusammenfügen der Flächen über die Zwischenschicht erfolgt bei einer Temperatur, die etwas unterhalb oder nur geringfügig oberhalb der Rekristallisationstemperatur der Zwischenschicht liegt. Insbesondere wird eine Schweisstemperatur zwischen 800 Grad Celsius und 1100 Grad Celsius gewählt. Der Fügedruck bzw. die Verformungsgeschwindigkeit werden so gross gewählt, dass eine Verformung der zu verbindenden Flächen erfolgt und eine vollständige Berührung derselben erzielt wird. Die Verformungsgeschwindigkeit kann durch eine entsprechende Wahl der Pressstempelgeschwindigkeit beeinflusst wreden. Der beim Fügen angewendete Druck beträgt vorzugsweise 1 bis 200 MPa. Er kann bei Bedarf grösser gewählt werden. Durch die gewählte Fügetemperatur zwischen 800 und 1100 Grad Celsius und die entsprechende Wahl der Verformungsgeschwindigkeit wird erreicht, dass die Rekristallisation des die Zwischenschicht bildenden metallischen Materials vor dem vollständigen Kontakt der zu verbindenden Flächen nicht eintritt. Durch die spezielle Wahl des oben beschriebenen Drucks und der entsprechenden Temperatur wird bewirkt, dass die zu Rekristallisation der Zwischenschicht notwendige Gefügestruktur erhalten bleibt.

Nach dem Fügen der zu verbindenden Bauelemente wird das hierdurch gebildete Bauteil mit einer vorgebbaren Geschwindigkeit abgekühlt. Daran anschliessend wird es sehr schnell auf oder über die Rekristallisationstemperatur der Zwischenschicht aufgeheizt. Vorzugsweise wird das Bauteil bis zur Lösungsglühtemperatur der Zwischenschicht erhitzt. Aufgrund dieser Erwärmung setzt eine Rekristallisation über die Fügefläche ein und ein vollständig rekristallisierter Fügebereich ohne Fügezone entsteht. Das Wachstum der Kristalle in der Zwischenschicht erfolgt vorzugsweise in der Ebene der Fügezone, da die Extrudiereinrichtung der Zwischenschicht erfindungsgemäss mit der Richtung der langgestreckten Körner der zu fügenden Bauteile übereinstimmt. Hierfür ist es erforderlich, dass die miteinander zu verbindenden Bauelemente und die Zwischenschicht die gleiche Extrudierrichtung aufweisen. Bei dem erfindungsgemässen Fügeverfahren wird, insbesondere durch die oben beschriebene Wahl der Verformungsgeschwindigkeit, der Temperatur und des Drucks erreicht, dass es in der Fügezone während des Fügens zu keinem Feinkornwachstum über 1 µm kommt.

Die Wärmebehandlung der durch das Fügeverfahren miteinander zu verbindenden Bauelemente kann auch durch eine Zonenrekristallisierung erfolgen. Sie wird vorzugsweise mit steilen Temperaturgradienten durchgeführt.

Erfindungsgemäss besteht die Möglichkeit, auf das Abkühlen des durch das Fügeverfahren gebildeten Bauteils zu verzichten. In diesem Fall wird das Bauteil direkt nach dem Fügen von der Fügetemperatur ausgehend schnell auf oder über die Rekristallisationstemperatur, insbesondere die Lösungsglühtemperatur erhitzt, so dass eine Rekristallisation der Zwischenschicht ohne Zwischenabkühlung einsetzt.

Die Erfindung wird nachfolgend anhand von Zeichnungen erläutert.

Es zeigen:

Figur 1: ein Bauteil einer Gasturbine, im Vertikalschnitt,

Figur 2: die beiden Bauelemente aus rekristallisierten oxiddispersionsgehärteten Werkstoffen mit der noch nicht rekristallisierten feinkristallinen Zwischenschicht,

Figur 3: einen Vertikalschnitt durch das Bauteil im Bereich der Fügezone vor der Rekristallisation,

Figur 4: einen Vertikalschnitt durch das Bauteil im Bereich der Fügezone nach der Rekristallisation.

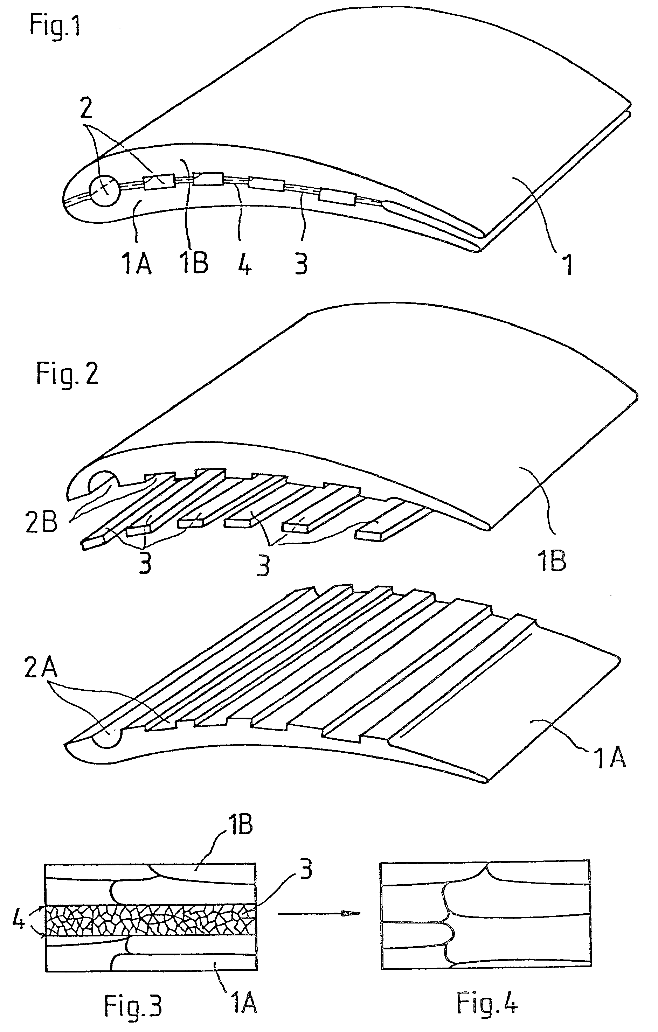

Figur 1 zeigt das mit dem heissen Gas in Berührung kommende Bauteil 1 einer Gasturbine. Es ist erfindungsgemäss aus zwei Bauelementen 1A und 1B und einer Zwischenschicht 3 zusammengefügt. Die Bauelemente 1A und 1B sowie die Zwischenschicht 3 sind aus einer oxiddispersionsgehärteten Legierung gefertigt. Bei dem hier gezeigten Ausführungsbeispiel wird ein oxiddispersionsgehärteter metallischer Werkstoff verwendet, der aus 13 bis 17 Gew.% Chrom, 2,5 bis 6 Gew.% Aluminium, 2 bis 4,24 Gew.% Titan, 0,4 bis 4,5 Gew.% Molybdän, 3,75 bis 6,25 Gew.% Wolfram, 0,1 bis 3 Gew.% Tantal, 0,02 bis 0,5 Gew.% Zirkonium, 0,01 bis 0,02 Gew.% Bor, 0,02 bis 2 Gew.% Yttriumoxid sowie Nickel besteht. Die angegebenen Gewichtsmengen beziehen sich auf das Gesamtgewicht der Legierung.

Es besteht die Möglichkeit, die Bauelemente 1A und 1B sowie die Zwischenschicht 3 auch aus einer Legierung herzustellen, die eine Zusammensetzung aus 18 bis 22 Gew.% Chrom, 0,02 bis 1 Gew.% Aluminium, 0,02 bis 1 Gew.% Titan, 0,2 bis 2 Gew.% Yttriumoxid aufweist, wobei der übrige Bestandteil der Legierung Nickel ist. Für die Fertigung der Bauteile 1A, 1B und der Zwischenschicht 3 kann auch ein Werkstoff verwendet werden, der 18 bis 22 Gew.% Chrom, 2 bis 6 Gew.% Aluminium, 0,2 bis 1 Gew.% Titan, 0,2 bis 1 Gew.% Yttriumoxid enthält, wobei der übrige Anteil durch Eisen gebildet wird. Die angegebenen Gewichtsmengen der beiden zuletzt genannten Legierungszusammensetzungen beziehen sich auf das Gesamtgewicht der jeweiligen Legierung.

Bei der Herstellung der Bauelemente 1A und 1B sowie der Zwischenschicht 3 werden zunächst aus einer der oben beschriebenen Legierungen Grundkörper (hier nicht dargestellt) durch Extrudieren gefertigt. Aus diesen Grundkörpern werden durch Schmieden, Walzen und/oder mechanische Bearbeitung die in Figur 2 dargestellten Bauelemente 1A und 1B sowie die zwischen ihnen anzuordnende Zwischenschicht 3 hergestellt.

Wie Figur 1 zeigt, besitzt das Bauteil 1 in seinem Zentrum mehrere zu seiner Längsachse parallel verlaufende Kühlkanäle 2. Da das Bauteil 1 aus der Legierung nicht integral gefertigt, insbesondere nicht gegossen werden kann, muss es aus den oben beschriebenen Bauelementen 1A und 1B unter Zwischenfügen der Zwischenschicht 3 zusammengefügt werden.

Zur Bildung der Kühlkanäle 2 werden die beiden Teileelemente 1A und 1B mit Vertiefungen 2A und 2B versehen. Diese Vertiefungen 2A und 2B können in die Bauteile 1A und 1B eingeschmiedet oder eingefräst werden.

Die in Figur 2 dargestellten Bauelemente 1A und 1B entsprechen genau den beiden Hälften des Bauteils 1, die beim Durchtrennen des selben in Richtung seiner Längsachse gebildet werden, abzüglich der nach dem Schweissen verformten Zwischenschicht 3. Nach dem Einfräsen oder Einschmieden der Vertiefungen 2A und 2B werden die beiden Bauelemente 1A und 1B einer Wärmebehandlung unterzogen, insbesondere einem Rekristallisationsprozess unterworfen. Die Flächen der beiden Bauelemente 1A und 1B, die zur Bildung des Bauteils 1 unter Zwischenfügen der Zwischenschicht 3 miteinander verbunden werden sollen, werden vor dem Fügen zusätzlich behandelt. Es besteht hierbei die Möglichkeit, die Flächen zu polieren oder mit einer Sägezahnstruktur zu versehen. Anschliessend werden die Flächen unter Zwischenfügen der Zwischenschicht 3 zusammengefügt. Die Zwischenschicht 3 ist im jetzigen Zustand noch nicht rekristallisiert. Ihr Werkstoff ist feinkörnig und noch verformbar. Im Gegensatz dazu ist der Werkstoff der beiden Bauelemente 1A und 1B bereits grosskörnig und weitgehend unverformbar. Nach dem Aufeinanderlegen der zu verbindenden Flächen unter Zwischenfügen der Zwischenschicht 3 wird die Fügezone 4 bzw. das gesamte Bauteil einer Temperatur zwischen 800 und 1100 Grad Celsius ausgesetzt. Gleichzeitig wird die Fügezone 4 einem Druck von vorzugsweise 1 bis 200 MPa ausgesetzt, wobei es zu einer definierten Verformung der Zwischenschicht 3 kommt. Die bei dem Fügeverfahren angewendete Temperatur ist so gewählt, dass vor der innigen vollflächigen Berührung der miteinander zu verbindenden Flächen keine Rekristallisation eintritt. Ferner wird durch die oben gewählte Temperatur und den Druck erreicht, dass es in der Zwischenschicht 3 zu keinem Feinkornwachstum über 1 μm kommt.

Nach der Beendigung des Fügeverfahrens, bei dem die Zwischenschicht 3 soweit verformt wird, dass längs der gesamten Fügezone 4 ein vollständig fester Kontakt zwischen den Bauelementen 1A und 1B und der Zwischenschicht 3 erreicht wird, wird das gerade gebildete Bauteil 1 einer Wärmebehandlung unterzogen. Es besteht die Möglichkeit, das Bauteil 1 dieser Wärmebehandlung direkt zu unterziehen oder zunächst abzukühlen. Im letztgenannten Fall wird das Bauteil 1 nach dem Abkühlen auf oder über die Rekristallisationstemperatur, insbesondere auf die Lösungsglühtemperatur der Zwischenschicht 3 erhitzt, so dass eine Rekristallisation über die Fügezone 4 einsetzt.

Wird das aus den Bauelementen 1A und 1B gefertigte Bauteil nach der Beendigung des Fügevorgangs nicht abgekühlt, so kann es ausgehend von der Fügetemperatur, schnell auf oder über Rekristallisationstemperatur, insbesondere auf die Lösungsglühtemperatur erhitzt werden, so dass auch hierbei eine Rekristallisation über der Fügezone 4 einsetzt. Wird das Bauteil 1 nicht abgekühlt, so wird der auf die Fügezone 4 wirkende Druck beim Erhitzen des Bauteils 1 allmählich reduziert. Die Lösungsglühtemperatur, auf die das Bauteil 1 aufgeheizt ist, bleibt so lange erhalten, bis die Rekristallisation zur Erreichung der gewünschten Festigkeit des Materials in der Fügezone 4 geführt hat.

Die Wärmebehandlung des Bauteils 1, insbesondere das Aufheizen desselben auf die Lösungsglühtemperatur, erfolgt vorzugsweise in einem hierfür ausgebildeten Ofen. Anstelle des Lösungsglühens kann auch eine Zonenrekristallisation im Temperaturgradienten durchgeführt werden, wobei das Bauteil 1 mit einer definierten Geschwindigkeit durch einen Temperaturgradienten bewegt wird.

In Figur 3 ist die Fügezone 4 des Bauteils 1 vor der Rekristallisation dargestellt.

In Figur 4 ist der gleiche Bereich des Bauteils 1 mit der Fügezone 4 nach der Rekristallisation dargestellt.

**Patentansprüche**

1. Fügeverfahren zum Herstellen eines Bauteils (1) aus zwei oder mehreren Bauelementen (1A, 1B) aus einer oxiddispersionsgehärteten Legierung auf der Basis von Nickel oder Eisen, wobei die Bauelemente (1A, 1B) bei einer Temperatur zwischen 800 und 1100 Grad Celsius und uner einem vorgegebenen Druck zusammengefügt werden, dadurch gekennzeichnet, dass die Bauelemente (1A, 1B) vor dem Fügen zur Bildung einer grobkörnigen gerichteten Struktur wärmebehandelt und anschliessend unter Zwischenfügen einer Zwischenschicht (3), die aus dem gleichen, jedoch noch feinkörnigen, unrekristallisierten und noch verformbaren Werkstoff besteht, zusammengefügt werden, dass die Flächen über die Zwischenschicht (3) bei der Temperatur zwischen 800 und 1100 Grad Celsius gefügt werden, dass der Fügedruck, bzw. die Verformungsgeschwindigkeit so gross gewählt werden, dass eine Verformung der zu verbindenden Flächen erfolgt und eine vollständige Berührung derselben erzielt wird, ohne dass die zur Rekristallisation der Zwischenschicht (3) notwendige Gefügestruktur verlorengeht und es in der Fügezone während des Fügens zu keinem Feinkornwachstum über 1 μm kommt, und dass das gebildete Bauteil (1) nach dem Fügen direkt oder nach dem Abkühlen einer Wärmebehandlung zur gerichteten Rekristallisation unterzogen wird.

2. Verfahren nach Anspruch 1, dadurch gekennzeichnet, dass die Zwischenschicht (3) beim Fügen die gleiche Extrudierrichtung wie die Bauelemente (1A, 1B) aufweist.

3. Verfahren nach einem der Ansprüche 1 oder 2, dadurch gekennzeichnet, dass die Abmessung der Zwischenschicht (3) so gross gewählt wird, dass sie vor der Rekristallisation eine Dicke von mindestens 1 bis 2 Korndurchmessern des rekristallisierten Werkstoffs in transversaler Richtung aufweist.

4. Verfahren nach einem der Ansprüche 1 bis 4, dadurch gekennzeichnet, dass die zu verbindenden Flächen der Bauelemente (1A, 1B) vor der Anordnung der Zwischenschicht (3) poliert oder mit einer rauhen sägezahnartigen Struktur versehen werden.

5. Verfahren nach einem der Ansprüche 1 bis 4, dadurch gekennzeichnet, dass die beiden Bauelemente (1A, 1B) unter einem Druck zwischen 1 und 200 MPa zusammengefügt werden.

6. Verfahren nach einem der Ansprüche 1 bis 5, dadurch gekennzeichnet, dass nach dem Erreichen eines vollständigen Materialkontaktes zwischen den zu verbindenden Flächen das aus den Bauelementen (1A, 1B) zusammengefügte Bauteil (1) abgekühlt und anschliessend auf oder über die Rekristallisationstemperatur, insbesondere die Lösungsglühtemperatur der Zwischenschicht (3) erhitzt wird, so dass eine Rekristallisation über die Fügefläche (4) einsetzt.

7. Verfahren nach einem der Ansprüche 1 bis 5, dadurch gekennzeichnet, dass das Bauteil (1) nach dem Erreichen eines vollständigen Materialkontaktes von der Fügetemperatur ausgehend schnell auf oder über die Rekristallisationstemperatur, insbesondere die Lösungsglühtemperatur erhitzt wird, so dass eine Rekristallisation über die Fügefläche einsetzt.

8. Verfahren nach einem der Ansprüche 1 bis 7, dadurch gekennzeichnet, dass das Bauteil (1) solange auf der Lösungsglühtemperatur gehalten wird, bis die Rekristallisation über die Schweissnaht zu der gewünschten Festigkeit des metallischen Materials in der Fügezone (4) geführt hat.

9. Verfahren nach einem der Ansprüche 1 bis 5, dadurch gekennzeichnet, dass das Bauteil (1) zur Rekristallisation der Zwischenschicht (3) zonengeglüht und die Zonenglühung unter einem steilen Temperaturgradienten durchgeführt wird.

## Claims

1. Joining method for the production of a structural member (1) from two or more components (1A, 1B) of an oxide dispersion-hardened alloy based on nickel or iron, the components (1A, 1B) being joined together at a temperature of between 800 and 1100 °C and under a given pressure, characterized in that the components (1A, 1B) are heat-treated before joining for the formation of a coarse-grained oriented structure and subsequently joined together with the incorporation of an intermediate layer (3), which consists of the same, but more finely-grained unrecrystallized and still deformable material, in that the surfaces are joined by the intermediate layer (3) at the temperature of between 800 and 1100 °C, in that the joining pressure and the rate of deformation respectively are chosen great enough for a deformation of the surfaces to be joined to take place and a complete contact of the same to be achieved without the compositional structure necessary for recrystallization of the intermediate layer (3) being lost and no fine-grain growth in excess of 1 μm occurring in the joining zone during joining, and in that, after joining, the structural member (1) formed is subjected directly or after cooling to a heat treatment for oriented recrystallization.

2. Method according to Claim 1, characterized in that, during joining, the intermediate layer (3) has the same direction of extrusion as the components (1A, 1B).

3. Method according to one of Claims 1 or 2, characterized in that the dimension of the intermediate layer (3) is chosen great enough for it to have, before recrystallization, the thickness of at least 1 to 2 grain diameters of the recrystallized material in transversal direction.

4. method according to one of Claims 1 to 3, characterized in that the surfaces to be joined of the components (1A, 1B) are polished or provided with a rough sawtooth-like structure before arrangement of the intermediate layer (3).

5. Method according to one of Claims 1 to 4, characterized in that the two components (1A, 1B) are joined together under a pressure of between 1 and 200 MPa.

6. Method according to one of Claims 1 to 5, characterized in that, after achieving a complete material contact between the surfaces to be joined, the structural member (1) joined together from the components (1A, 1B) is cooled and subsequently heated to or beyond the recrystallization temperature, in particular the solution annealing temperature of the intermediate layer (3), so that a recrystallization is initiated over the joining surface (4).

7. Method according to one of Claims 1 to 5, characterized in that, after achieving a complete material contact, the structural member (1) is heated quickly, starting from the joining temperature, to or beyond the recrystallization temperature, in particular the solution annealing temperature, so that a recrystallization is initiated over the joining surface.

8. Method according to one of Claims 1 to 7, characterized in that the structural member (1) is held at the solution annealing temperature until the recrystallization over the weld has resulted in the desired strength of the metallic material in the joining zone (4).

9. Method according to one of Claims 1 to 5, characterized in that the structural member (1) is zone-annealed for recrystallization of the intermediate layer (3) and the zone annealing is carried out with a steep temperature.

## Revendications

1. Procédé d'assemblage pour réaliser un composant (1) constitué de deux ou plusieurs éléments (1A, 1B) en un alliage à base de nickel ou fer, durci par dispersion d'oxydes, les éléments (1A, 1B) étant assemblés sous une température entre 800 et 1100 °C et sous une pression prédéterminée, caractérisé par le fait qu'avant l'assemblage, les éléments (1A, 1B) sont traités thermiquement pour former une structure orientée à gros grain, après quoi ils sont assemblés avec interposition d'une couche intercalaire (3) constituée de la même matière, toutefois encore dotée d'un grain fin, non recristallisée et encore déformable, par le fait que les surfaces sont assemblées par l'intermédiaire de la couche intercalaire (3), à la température comprise entre 800 et 1100 °C, par le fait que la pression d'assemblage ou la vitesse de déformation sont choisies assez grandes pour produire une déformation des surfaces à assembler et obtenir un contact complet de celles-ci, sans que la structure nécessaire pour la recristallisation de la couche intercalaire (3) disparaisse, et sans qu'il y ait de croissance de grains fins au-delà de 1 μm dans la zone de l'assemblage, pendant la formation de celui-ci, et par le fait qu'après l'assemblage, le composant formé (1) est soumis, directement ou après refroidissement, à un traitement thermique de recristallisation orientée.

2. Procédé selon revendication 1, caractérisé par le fait que la couche intercalaire (3) présente, lors de l'assemblage, la même direction d'extrusion que les éléments (1A, 1B).

3. Procédé selon l'une des revendications 1 ou 2, caractérisé par le fait que la dimension de la couche intercalaire (3) est telle que cette couche présente en direction transversale, avant la recristallisation, une épaisseur d'au moins 1 à 2 diamètres du grain de la matière recristallisée.

4. Procédé selon l'une des revendications 1 à 4, caractérisé par le fait qu'avant la mise en place de la couche intercalaire (3) les surfaces des éléments (1A, 1B) à assembler sont polies ou munies d'une structure rugueuse du genre dents de scie.

5. Procédé selon l'une des revendications 1 à 4, caractérisé par le fait que les deux éléments (1A, 1B) sont assemblés sous une pression comprise entre 1 et 200 MPa.

6. Procédé selon l'une des revendications 1 à 5, caractérisé par le fait qu'après l'obtention d'un contact matériel complet entre les surfaces à assembler, le composant (1) formé par les éléments assemblés (1A, 1B) est refroidi puis est chauffé à, ou au-dessus de, la température de recristallisation, notamment à la température de recuit de mise en solution de la couche intercalaire (3), de sorte qu'il se produit une recristallisation traversant la surface (4) d'assemblage.

7. Procédé selon l'une des revendications 1 à 5, caractérisé par le fait qu'après obtention d'un contact matériel complet, le composant (1) est rapidement chauffé, en partant de la température d'assemblage, à ou au-dessus de, la température de recristallisation, notamment à la température de recuit de mise en solution, de sorte qu'il se produit une recristallisation traversant la surface d'assemblage.

8. Procédé selon l'une des revendications 1 à 7, caractérisé par le fait que le composant (1) est maintenu à la température de recuit de mise en solution jusqu'à ce que la recristallisation traversant le joint soudé ait conduit à la résistance désirée du matériau métallique dans la zone d'assemblage (4).

9. Procédé selon l'une des revendications 1 à 5, caractérisé par le fait que, pour la recristallisation de la couche intercalaire (3), le composant (1) est soumis à un recuit de zone effectué sous un fort gradient de température.

Fig.1

2

1A  1B  4  3  1

Fig. 2

2B

3  3  1B

2A

1A

1B

3

4

Fig.3  1A

Fig.4